# EUROPEAN PATENT APPLICATION

(11) **EP 4 576 873 A1**
(43) Date of publication of application: **25.06.2025**
(21) Application number: 23862014.0
(22) Date of filing: 29.06.2023
(51) Int. Cl.: H04W 28/24

(54) **COMMUNICATION RESOURCE MANAGEMENT METHOD, APPARATUS AND SYSTEM, AND STORAGE MEDIUM**

(30) Priority: 08.09.2022 CN 202211094057
(71) Applicant: Huawei Technologies Co., Ltd., Shenzhen, Guangdong 518129 (CN)
(72) Inventor: ZHU, Qianghua, Shenzhen, Guangdong 518129 (CN); GAO, Guojuan, Shenzhen, Guangdong 518129 (CN); ZHOU, Han, Shenzhen, Guangdong 518129 (CN)
(74) Representative: Pfenning, Meinig & Partner mbB
(86) International application number: PCT/CN2023/104059
(87) International publication number: WO 2024/051313

(57) **Abstract**

This application provides a communication resource management method, an apparatus, and a related device. A session management function entity obtains a quality of service QoS parameter set from a first network element, where the QoS parameter set includes at least one QoS parameter applied to a terminal device group, and the terminal device group includes a plurality of terminal devices; obtains a corresponding policy control rule set based on the QoS parameter set, where the policy control rule set includes at least one policy control rule; and applies the policy control rule set to a data connection session of a terminal device, where the data connection session of the terminal device is for intra-group communication of the terminal device group. Therefore, a management resource can be efficiently configured for a PDU session corresponding to the terminal device in the terminal device group.

## Description

### TECHNICAL FIELD

This application relates to the communication field, and specifically, to a resource management method and a communication apparatus.

### BACKGROUND

A 5th generation (5th generation, 5G) local area network (local area network, 5G LAN) service is a service provided by a current 5G network, and is mainly applied to home communication, enterprise office, factory manufacturing, the internet of vehicles, power grid reconstruction, public security organs, and the like. The service can provide private communication of an internet protocol type or a non-IP type (for example, an Ethernet type) for two or more terminals in a group of terminals. For example, devices in a factory may form a group, and the devices in the group may send an Ethernet data packet to each other. Alternatively, office devices (such as mobile phones, computers, or notebook computers) of employees in a department of an enterprise may form a group, and send an IP data packet to each other.

QoS (Quality of Service) is a security mechanism that ensures quality of service of a network. In an actual network environment, QoS configuration usually needs to be performed on a user equipment to ensure quality of service of a network. In existing QoS configuration, an application management function network element AF separately sends a corresponding configuration request to a network function exposure network element, to separately perform QoS configuration on a PDU session of a single user equipment. Therefore, efficiency is low.

### SUMMARY

Embodiments of this application provide a communication resource management method, an apparatus, and a related device. According to the communication resource management method, a data connection session can be configured for at least one terminal device in a terminal device group.

According to a first aspect, an embodiment of this application provides a communication resource management method, applied to a session management function entity. The method includes:
receiving a group identifier of a terminal device group to which a first terminal device belongs, and a data network identity and network slice assistance information of a data connection session of the first terminal device; receiving, from a data management network element, a data network identity and network slice assistance information that correspond to the group identifier and first indication information, where the first indication information indicates to obtain, from an authentication server, a quality of service QoS parameter set applied to the terminal device group, and the QoS parameter set includes at least one QoS parameter applied to the terminal device group; determining that the data network identity and the network slice assistance information of the data connection session of the first terminal device are respectively the same as the data network identity and the network slice assistance information of the terminal device group; sending a first authentication request message to the authentication server based on the first indication information, where the first authentication request message includes the data network identity and the network slice assistance information of the terminal device group; obtaining a first authentication response message from the authentication server, where the first authentication response message includes the QoS parameter set of the terminal device group; obtaining a policy control rule set based on the QoS parameter set, where the policy control rule set includes at least one policy control rule; and binding the policy control rule set to a QoS flow of the data connection session of the first terminal device. It can be learned that the corresponding policy control rule is obtained based on the QoS parameter set, and the policy rule is applied to the data connection session, so that a first network element can obtain at least one quality of service QoS flow used for the terminal device group at a time. This reduces signaling exchange and saves a network resource.

In a possible design, the first indication information further includes an address of the authentication server. It can be learned that the QoS parameter set may be obtained from the authentication server.

In a possible design, the data network identity and the network slice assistance information of the data connection session of the first terminal device are received from the first terminal device; and the group identifier of the terminal device group is received from the data management network element.

In a possible design, the obtaining a policy control rule set based on the QoS parameter set includes: sending a second request message to a policy control function entity, where the second request message includes the QoS parameter set; and receiving a second response message sent by the policy control function entity, where the second response message includes the policy control rule set.

In a possible design, the QoS parameter is at least one of the following parameters: a priority of a session transmission packet, a packet size, a delay, a maximum rate, a guaranteed rate, a packet error rate, a periodicity, a clock domain, packet arrival time, time to live, or silent time.

According to a second aspect, an embodiment of this application provides a second communication resource management method, applied to a data management network element entity. The method includes: receiving a configuration request message sent by an application function network element, where the configuration request message includes a group identifier of a terminal device group to which a first terminal device belongs, and a data network identity and network slice assistance information of the terminal device group and first indication information, the first indication information indicates to obtain, from an authentication server, a quality of service QoS parameter set applied to the terminal device group, and the QoS parameter set includes at least one QoS parameter applied to the terminal device group; receiving the group identifier sent by a session management network element; and indexing the data network identity and the network slice assistance information of the terminal device group based on the group identifier, and sending the data network identity and the network slice assistance information of the terminal device group and the first indication information to the session management network element. It can be learned that the data management network element entity obtains information related to the QoS parameter set, and sends the information related to the QoS parameter set to the session management network element, so that the session management network element can obtain the information related to the QoS parameter set by using one message, to reduce signaling exchange.

In a possible design, the first indication information further includes an address of the authentication server. In a possible design, the QoS parameter is at least one of the following parameters: a priority of a session transmission packet, a packet size, a delay, a maximum rate, a guaranteed rate, a packet error rate, a periodicity, a clock domain, packet arrival time, time to live, or silent time.

According to a third aspect, an embodiment of this application provides a communication resource management method, including: A data management function entity receives a configuration request message sent by an application function network element, where the configuration request message includes a group identifier of a terminal device group to which a first terminal device belongs, and a data network identity and network slice assistance information of the terminal device group and first indication information, the first indication information indicates to obtain, from an authentication server, a quality of service QoS parameter set applied to the terminal device group, and the QoS parameter set includes at least one QoS parameter applied to the terminal device group. The data management function entity receives the group identifier sent by a session management network element. The data management function entity indexes the data network identity and the network slice assistance information of the terminal device group based on the group identifier, and sends the data network identity and the network slice assistance information of the terminal device group and the first indication information to a session management function entity. The session management function entity receives the data network identity and the network slice assistance information of the terminal device group and the first indication information from the data management function entity. The session management function entity determines that a data network identity and network slice assistance information of a data connection session of the first terminal device are respectively the same as the data network identity and the network slice assistance information of the terminal device group, and sends a first authentication request message to the authentication server based on the first indication information, where the first authentication request message includes the data network identity and the network slice assistance information of the terminal device group. The session management function entity obtains a first authentication response message from the authentication server, where the first authentication response message includes the QoS parameter set of the terminal device group. The session management function entity obtains a policy control rule set based on the QoS parameter set, where the policy control rule set includes at least one policy control rule. The session management function entity binds the policy control rule set to a QoS flow of the data connection session of the first terminal device. In a possible design, the first indication information further includes an address of the authentication server.

In a possible design, the session management function entity receives the data network identity and the network slice assistance information of the data connection session of the first terminal device from the first terminal device.

In a possible design, that the session management function entity obtains a policy control rule set based on the QoS parameter set includes: sending a second request message to a policy control function entity, where the second request message includes the QoS parameter set; and receiving a second response message sent by the policy control function entity, where the second response message includes the policy control rule set.

In a possible design, the QoS parameter is at least one of the following parameters: a priority of a session transmission packet, a packet size, a delay, a maximum rate, a guaranteed rate, a packet error rate, a periodicity, a clock domain, packet arrival time, time to live, or silent time.

According to a fourth aspect, an embodiment of this application provides a communication apparatus. The communication apparatus may be a device or a chip or a circuit disposed in the device. The communication apparatus includes a module configured to perform the communication resource management method provided in any one of the possible designs of the first aspect.

According to a fifth aspect, an embodiment of this application provides a communication apparatus. The communication apparatus may be a device or a chip or a circuit disposed in the device. The communication apparatus includes a module configured to perform the communication resource management method provided in any one of the possible designs of the second aspect.

According to a sixth aspect, an embodiment of this application provides a communication apparatus. The communication apparatus includes a processor, and the processor is configured to execute instructions stored in a memory, to enable the communication apparatus to perform the communication resource management method provided in any one of the possible designs of the first aspect or the second aspect.

According to a seventh aspect, an embodiment of this application provides a computer program or a computer program product, including code or instructions. When the code or the instructions are run on a computer, the computer is enabled to perform the method in any one of the possible implementations of the first aspect and the second aspect.

### BRIEF DESCRIPTION OF DRAWINGS

FIG. 1 is a diagram of an architecture of a network system according to an embodiment of this application;
FIG. 2 is a diagram of a user plane architecture of a 5G LAN service;
FIG. 3 shows a communication resource configuration method according to an embodiment of this application;
FIG. 4 shows another communication resource configuration method according to an embodiment of this application;
FIG. 5A and FIG. 5B show another communication resource configuration method according to an embodiment of this application;
FIG. 6 shows another communication resource configuration method according to an embodiment of this application;
FIG. 7 shows another communication resource configuration method according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of another communication apparatus according to an embodiment of this application; and
FIG. 11 is a diagram of a structure of another communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (referred to as a 5G system (5G system, 5GS) for short)

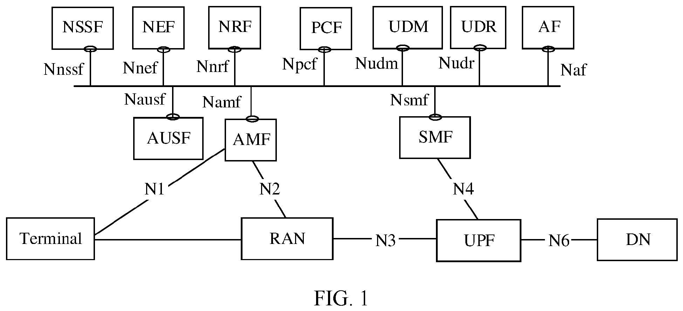

FIG. 1 is a diagram of a non-roaming architecture of the 5GS. As shown in FIG. 1, the 5GS includes an access network (access network, AN) and a core network (core network, CN), and may further include a terminal.

The terminal may be a terminal having a receiving and sending function, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a remote station, a remote terminal, mobile equipment, a user terminal, a terminal, a wireless communication device, a user agent, or a user apparatus. The terminal in embodiments of this application may be a mobile phone (mobile phone), a cellular phone (cellular phone), a smartphone (smart-phone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The foregoing AN is for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, or may be referred to as a radio access network (radio access network, RAN) device. The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF).

As shown in FIG. 1, a UE accesses a 5G network via a RAN device, and the UE communicates with the AMF network element through an N1 interface (N1 for short). The RAN network element communicates with the AMF network element through an N2 interface (N2 for short). The RAN network element communicates with the UPF network element through an N3 interface (N3 for short). The SMF communicates with the UPF network element through an N4 interface (N4 for short), and the UPF network element accesses a data network (data network, DN) through an N6 interface (N6 for short). In addition, the control plane functions such as the AUSF network element, the AMF network element, the SMF network element, the NSSF network element, the NEF network element, the NRF network element, the PCF network element, the UDM network element, the UDR network element, or the AF shown in (a) in FIG. 1 interact with each other through a service-based interface. For example, a service-based interface exhibited by the AUSF network element is Nausf, a service-based interface exhibited by the AMF network element is Namf, a service-based interface exhibited by the SMF network element is Nsmf, a service-based interface exhibited by the NSSF is Nnssf, a service-based interface exhibited by the NEF network element is Nnef, a service-based interface exhibited by the NRF network element is Nnrf, a service-based interface exhibited by the PCF network element is Npcf, a service-based interface exhibited by the UDM network element is Nudm, a service-based interface exhibited by the UDR network element is Nudr, and a service-based interface exhibited by the AF is Naf.

The RAN device may be a device that provides access for the terminal. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The UPF network element is mainly responsible for user data processing (forwarding, receiving, charging, and the like). For example, the UPF network element may receive user data from a data network (data network, DN), and forward the user data to the terminal via the access network device. The UPF network element may alternatively receive the user data from the terminal via the access network device, and forward the user data to the DN. The DN network element is an operator network that provides a data transmission service for a user, for example, an internet protocol (internet protocol, IP) multi-media service (IP multi-media service, IMS), and an internet (internet). The DN may be an external network of an operator, or may be a network controlled by an operator, and is configured to provide a service for the terminal device.

The AUSF network element is mainly configured to perform security authentication on the terminal.

The AMF network element is mainly for mobility management in the mobile network, for example, user location update, registration of a user to a network, and user handover.

The SMF network element is mainly for session management in the mobile network, for example, session establishment, modification, and release. A specific function is, for example, allocating an internet protocol (internet protocol, IP) address to a user, or selecting a UPF network element that provides a data packet forwarding function.

The PCF network element mainly supports providing a unified policy framework to control network behavior, and providing a policy rule for a control layer network function, and is responsible for obtaining policy-related subscription information of the user. The PCF network element may provide a policy such as a quality of service (quality of service, QoS) policy or a slice selection policy to the AMF network element and the SMF network element.

The NSSF network element is mainly configured to select a network slice for the terminal.

The NEF network element is mainly for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

As shown in FIG. 1, the 5G network may further include an access device, a user plane function (user plane function, UPF) network element, an authentication server function (AUSF) network element, a network slice selection function (NSSF) network element, a network exposure function (NEF) network element, a network function repository function (network exposure function Repository Function, NRF) network element, a unified data management (Unified Data Management, UDM) network element, an application function (application function, AF) network element, and the like. This is not specifically limited in this embodiment of this application.

### (2) QoS

A UE may establish a data connection session (for example, a protocol data unit (protocol data unit, PDU) session (session)) with a UPF network element. The PDU session is used as an example for description in the following to describe methods. For a PDU session (session), a QoS flow (flow) is a minimum granularity for QoS differentiation. The QoS flow may be a QoS flow that supports guaranteed flow bit rate (guaranteed bit rate, GBR) QoS, namely, a GBR QoS flow, or a QoS flow that supports non-guaranteed flow bit rate (non-guaranteed bit rate, non-GBR) QoS, namely, a non-GBR QoS flow. One PDU session may include a plurality of QoS flows. For example, a maximum of 64 QoS flows are supported. Each QoS flow has a corresponding QoS flow identifier (QoS flow ID, QFI), to distinguish between different QoS flows. User plane service flows with a same QFI may be mapped to a same QoS flow, so that a same service forwarding processing mode (for example, scheduling) may be for processing the user plane service flows. One PDU session may correspond to a plurality of radio bearers (radio bearers, RBs) on an air interface, and one radio bearer may include one or more QoS flows, in other words, carry one or more QoS flows.

QoS configuration is at a QoS flow level, that is, the configuration is performed at a granularity of the QoS flow. A feature of the QoS flow may be represented by some parameters. An SMF network element preconfigures, establishes, or modifies a corresponding QoS flow by configuring these parameters. For example, for a QoS flow, these parameters include a QoS profile (QoS profile) on a RAN device side, a QoS rule (QoS rule) on a UE side, and an uplink packet detection rule (packet detection rule, PDR) and a downlink PDR on a UPF network side.

### 3. 5G LAN service

The 5G LAN service is a service provided by a 5G network. The service can provide private communication of an IP type or a non-IP type (Ethernet type) for two or more UEs in a group of UEs. The 5G LAN service is mainly for home communication, enterprise office, factory manufacturing, an internet of vehicles, power grid reconstruction, public security organs, and the like. A UE in a group of UEs joins the group because of a service requirement or a dedicated attribute. The UE in the group may communicate with each other by using the 5G LAN service. For example, devices in a factory form a group, and the devices in the group may send an Ethernet data packet to each other. Office devices (mobile phones, computers, or notebook computers) of employees in a department of an enterprise form a group, and send an IP data packet to each other. If two UEs are not in a same group, the two UEs cannot communicate with each other.

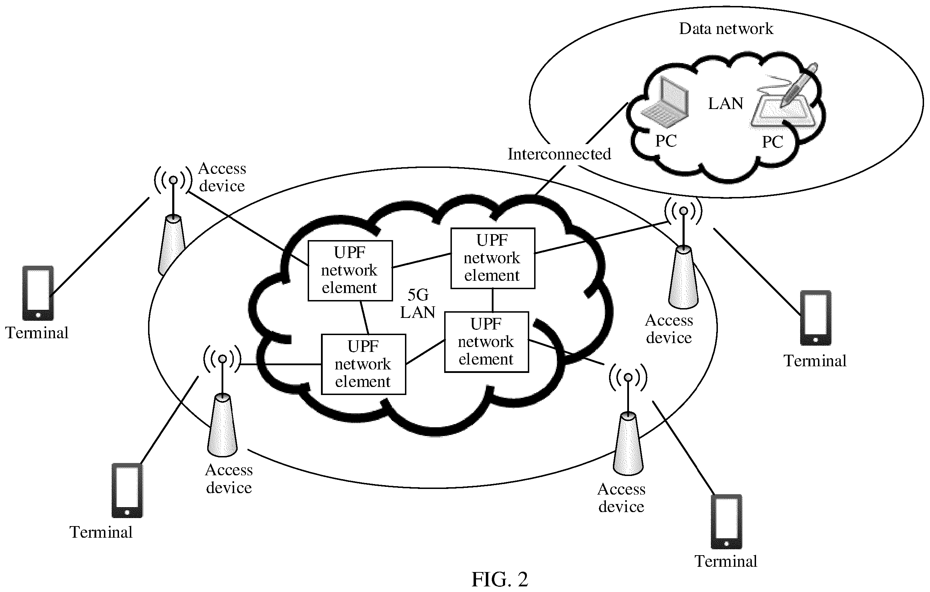

FIG. 2 is a diagram of a user plane architecture of an existing 5G LAN service. A terminal establishes a session to a UPF network element that provides the 5G LAN service, to access the UPF network element that provides the 5G LAN service. As described above, the UPF network element that provides the 5G LAN service may interconnect with an existing LAN in a data network through N6, for example, communicate with a personal computer (personal computer, PC) in the LAN. Alternatively, the UPF network element that provides the 5G LAN service may associate sessions of different terminals through an internal connection between UPF network elements, to implement private communication. This is not specifically limited in this embodiment of this application.

To complete communication in a 5G LAN, specific user equipments need to be grouped into a VN group based on a requirement, and members in the VN group may perform intra-group communication in the 5G LAN. In a VN configuration mode, a third party may flexibly perform dynamic VN group subscription management through a capability exposure platform. In a conventional technology, when a QoS flow is configured for a PDU session corresponding to each terminal device in a VN group, an AF needs to separately send a parameter configuration message to configure the PDU session of each terminal device one by one. This resource configuration management manner has low efficiency and high signaling overheads. Therefore, how to efficiently configure a management resource for a PDU session corresponding to a terminal device in a terminal device group becomes a problem that needs to be resolved.

The following describes technical solutions of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

The following describes key terms in embodiments of this application.

A terminal device group includes a plurality of terminal devices. For example, the terminal device group may be a group of terminal devices that can enjoy a consistency service provided by an application network element, or may be a group of all terminal devices located in a specified area. The terminal device group may be a 5G VN or another type of terminal device group, for example, a temporary terminal device group or a dynamic terminal device group (a terminal device group in which members need to be dynamically managed). This is not specifically limited.

A QoS parameter set includes at least one QoS parameter applied to a terminal device group. It should be noted that the QoS parameter set herein is at a group granularity, that is, each terminal device group corresponds to one QoS parameter set.

A policy control rule set includes at least one policy control rule that is also referred to as a PCC rule. A plurality of PCC rules are associated with one QoS flow.

A data connection session is an association (association) between a user equipment and a user plane data gateway, and is for providing a connection service for communication between the user equipment and an accessed network or between the user equipment and another user equipment. A creation process of the data connection session may be initiated by the user equipment, and a removal process of the data connection session may be initiated by the user equipment, or may be initiated by another network device. In embodiments of this application, the data connection session is also sometimes referred to as a "data session" or a "session" for short. The data connection session may be an IP-CAN (IP-connectivity access network, IP-connectivity access network) session or a protocol data unit session (protocol data unit session, PDU session) defined in the 3GPP standard specification, or may be a session in another form. This is not limited in embodiments of this application.

The data connection session may be a protocol data unit session applicable to a 5G network, or may be another session applicable to another network. This is not limited in embodiments of this application.

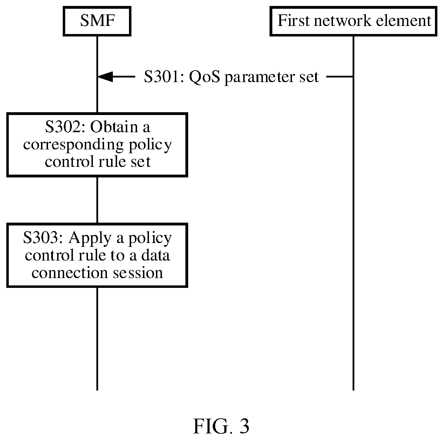

FIG. 3 is a schematic flowchart of a communication resource management method according to an embodiment of this application. The communication resource management method is applied to a scenario in which session management resources are configured for terminal devices belonging to a same terminal device group.

S301: An SMF obtains a quality of service QoS parameter set from a first network element, where the QoS parameter set includes at least one QoS parameter applied to a terminal device group.

In an implementation, the first network element is an AF, and the QoS parameter set is obtained from the AF.

In an implementation, the first network element is a UDM, and the QoS parameter set is obtained from the UDM.

In this way, the SMF obtains the QoS parameter set from the first network element; and when terminal devices in the terminal device group separately establish PDU sessions, the SMF does not need to obtain, from the AF or another network element in a plurality of batches, QoS parameters corresponding to the terminal devices, so that signaling exchange is reduced.

S302: The SMF obtains a corresponding policy control rule set based on the QoS parameter set, where the policy control rule set includes at least one policy control rule.

The SMF sends a second request message to a PCF, where the second request message includes the QoS parameter set. The SMF receives a first response message sent by the PCF, where the first response message includes the policy control rule set.

S303: The SMF applies the policy control rule to a data connection session of the terminal device, where the data connection session of the terminal device is for intra-group communication of the terminal device group.

The SMF binds the policy control rule to a QoS flow of the data connection session of the terminal device.

The SMF determines, based on an obtained group DNN and slice identifier, and a DNN and a slice identifier that correspond to the data connection session of the terminal device, that the data connection session is for internal communication of the terminal device group. The group slice identifier is for identifying a slice instance corresponding to the terminal device group. When it is determined that the DNN and the slice identifier that correspond to the data connection session are the same as the group DNN and the group slice identifier, it is determined that the data connection session is for the internal communication of the terminal device group to which the terminal device belongs.

In this way, after it is determined that the data connection session of the terminal device is for the internal communication of the terminal device group to which the terminal device belongs, the SMF obtains the QoS parameter set corresponding to the terminal device group, and a QoS parameter corresponding to a single terminal device does not need to be separately obtained. This helps simplify signaling exchange and reduce consumption of a network resource.

The foregoing steps are merely examples for ease of description, and do not constitute a limitation on a sequence of steps.

The following separately describes in detail two implementations in the embodiment in FIG. 3.

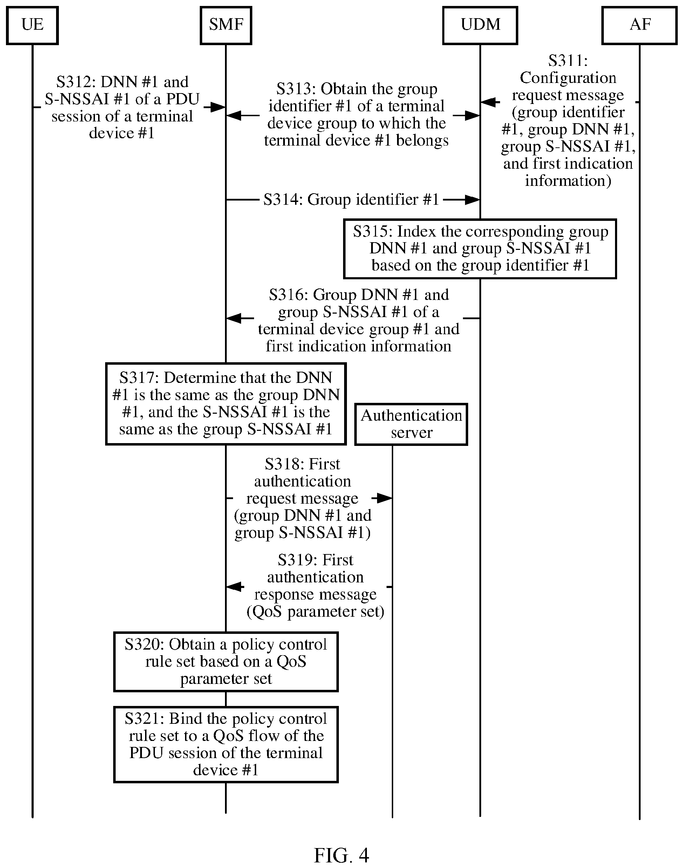

FIG. 4 is a schematic flowchart of a resource configuration management method according to an embodiment of this application.

S311: A UDM receives a configuration request message sent by an application function network element AF, where the configuration request message includes a group identifier (group identifier #1) of a terminal device group to which a first terminal device (terminal device #1) belongs, a data network identity (group DNN #1) and network slice assistance information (group S-NSSAI #1) that correspond to the group identifier, and first indication information.

The first indication information indicates to obtain, from an authentication server, a quality of service QoS parameter set applied to the terminal device group, and the QoS parameter set includes at least one QoS parameter applied to the terminal device group.

S312: The SMF receives a data network identity and network slice assistance information from a data connection session of the terminal device.

The UE establishes a PDU session request, where the PDU session request carries a data network identity DNN and network slice assistance information S-NSSAI of a PDU session of the UE.

The SMF may obtain a terminal device identifier from an AMF.

S313: The SMF obtains the group identifier #1 of the terminal device group to which the first terminal device belongs.

The UDM stores a subscription data packet of the UE, where the subscription data packet includes the group identifier of the terminal device group to which the first terminal device belongs.

The SMF obtains, from the UDM based on the terminal device identifier, the group identifier (group identifier #1) of the terminal device group to which the first terminal device belongs.

S314: The SMF sends, to the UDM, the group identifier #1 of the terminal device group to which the first terminal device belongs.

S315: The UDM indexes, based on the group identifier, the data network identity (group DNN) and the network slice assistance information (group S-NSSAI) that correspond to the group identifier.

S316: The UDM sends, to the SMF, the data network identity (group DNN) and the network slice assistance identifier (group S-NSSAI) that correspond to the group identifier and the first indication information.

Correspondingly, the SMF receives the group DNN, the group S-NSSAI, and the first indication information from the UDM.

S317: The SMF determines that the data network identity of the data connection session of the terminal device is the same as the data network identity corresponding to the group identifier, and the network slice assistance information of the data connection session of the terminal device is the same as the network slice assistance information corresponding to the group identifier.

The SMF determines that the DNN #1 of the terminal device is the same as the group DNN #1 of the terminal device group, and the S-NSSAI #1 of the terminal device is the same as the group S-NSSAI #1 of the terminal device group. Therefore, it is determined that the terminal device belongs to the terminal device group, and the data connection session of the terminal device is for internal communication of the terminal device group to which the terminal device belongs.

S318: The SMF sends a first authentication request message to the authentication server based on the first indication information.

The first authentication request message includes the data network identity and the network slice assistance information that correspond to the group identifier.

S319: The authentication server sends a first authentication response message to the SMF. The first authentication response message includes the QoS parameter set of the terminal device group.

A mapping relationship between the QoS parameter set and the data network identity (group DNN#1) and the network slice assistance information (group S-NSSAI#1) that correspond to the group identifier is configured on the authentication server. The authentication server indexes the corresponding QoS parameter set based on the received group DNN #1 and group S-NSSAI #1. In this way, the QoS parameter set corresponding to the terminal device group is obtained.

The QoS parameter set includes the QoS parameter applied to the terminal device group. Specifically, the QoS parameter set includes at least one of the following parameters: a priority of a session transmission packet, a packet size, a delay, a maximum rate, a guaranteed rate, a packet error rate, a periodicity, a clock domain, packet arrival time, time to live, or silent time.

S320: The SMF obtains a policy control rule set based on the QoS parameter set. The policy control rule set includes at least one policy control rule.

The SMF sends the QoS parameter set to a PCF, and the PCF obtains the corresponding policy control rule set based on the QoS parameter set, and then sends the policy control rule set to the SMF.

S321: The SMF binds the policy control rule set to a QoS flow of the data connection session of the first terminal device.

In this way, after it is determined that the data connection session of the terminal device is for the internal communication of the terminal device group to which the terminal device belongs, the SMF obtains the QoS parameter set corresponding to the terminal device group, and a QoS parameter corresponding to a single terminal device does not need to be separately obtained. This helps simplify signaling exchange and reduce consumption of a network resource.

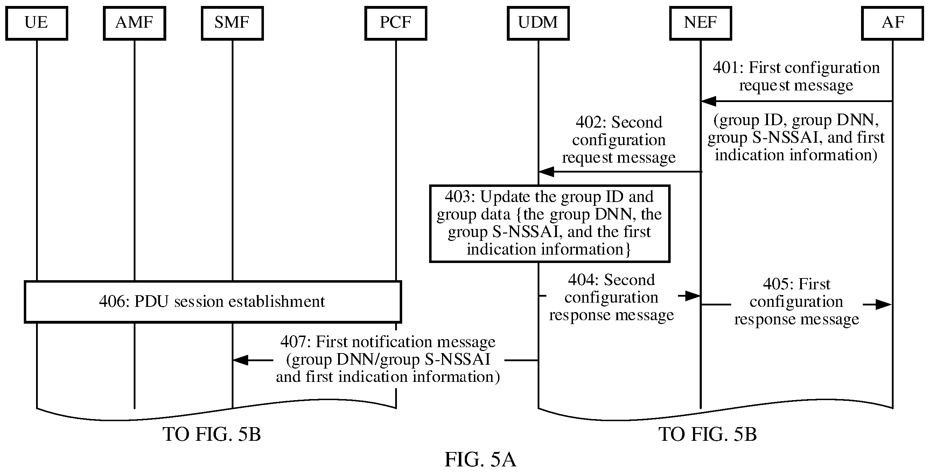

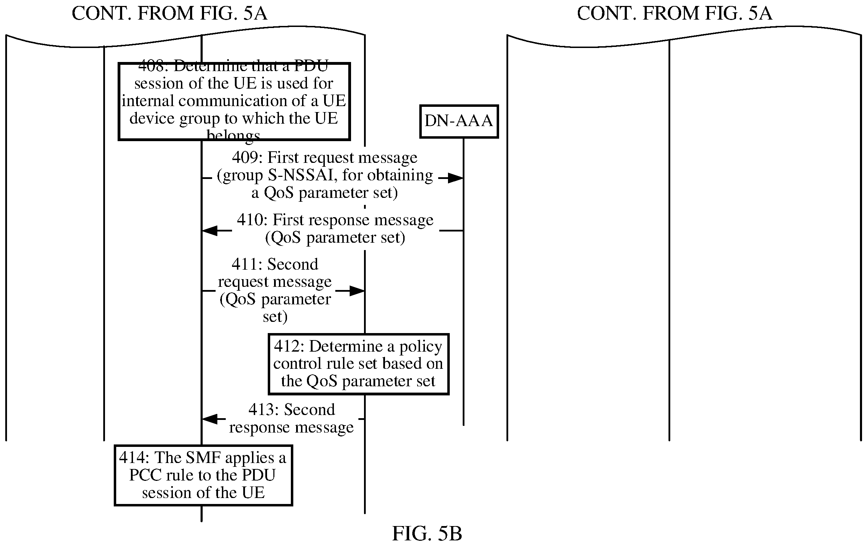

FIG. 5A and FIG. 5B is a schematic flowchart of a resource configuration management method according to an embodiment of this application.

S401: An application function network element AF sends a first configuration request message to a network function exposure network element NEF.

The AF is configured to provide a specific service. The AF may be a service server. For example, the AF may be a game server or a video server.

The first configuration request message is for sending a configuration message related to a service requirement. The first configuration request message is for requesting to create/update/delete a terminal device group. For example, the first configuration request message is an Nnef_ParameterProvision_Create/Update/Delete request.

In an implementation, if the service requirement is that the terminal device group is to create or update a PDU session of the terminal device group, the first configuration request message is for sending a related parameter needed for creating or updating the PDU session of the terminal device group.

A first parameter configuration request message includes a group identifier (Group ID) of a terminal device group to which a first terminal device belongs, a data network identity (group DNN) and network slice assistance information (group S-NSSAI) that correspond to the group identifier and first indication information.

The group identifier (Group ID) is for identifying the terminal device group, and each terminal device group corresponds to a respective group identifier. For example, a group identifier #1 is for identifying a first terminal device group #1, and a first terminal device #1 belongs to the first terminal device group #1. A group identifier group ID #2 is for identifying a second terminal device group.

The group network slice assistance information (Group S-NSSAI) is for identifying a slice corresponding to the terminal device group. For ease of description, the group network slice assistance information is also referred to as a group slice identifier. A network slice corresponding to at least one terminal device in the terminal device group is associated by using the group slice identifier. For example, group S-NSSAI #1 is for identifying a slice identifier corresponding to a first terminal device group, in other words, the group S-NSSAI #1 identifies a slice in the first terminal device group.

The first indication information indicates that the terminal device group has a corresponding QoS parameter set. Optionally, the first indication information further includes address information of a DN-AAA server, and the first indication information indicates to obtain, from an authentication server (for example, the DN-AAA server), a quality of service QoS parameter set applied to the terminal device group.

The QoS parameter set is the QoS parameter set corresponding to the terminal device group, and includes at least one QoS parameter applied to the terminal device group. The QoS parameter set is a QoS parameter at a group granularity.

For example, if the QoS parameter set corresponding to the terminal device group includes a QoS parameter #1, the QoS parameter #1 is applied to a PDU session corresponding to one of terminal devices in the terminal device group.

For another example, the QoS parameter set corresponding to the terminal device group includes a QoS parameter #2. Both the terminal device #1 and a terminal device #2 belong to the terminal device group, and the QoS parameter #2 is applied to the terminal device #1 and the terminal device #2.

The first parameter configuration request message further includes a group data network identity (Group data network name, Group DNN), also referred to as a group data network identity or a group DNN. The group DNN is for identifying a group data network identity of a data network corresponding to the terminal device group, and a PDU session corresponding to at least one terminal device in the terminal device group is associated by using the group DNN. For example, a group DNN #1 is for identifying a data network corresponding to the group ID #1 of the first terminal device group, and each terminal device in the first terminal device group belongs to the data network.

In a possible implementation, there is a correspondence between a group identifier of the terminal device group and a group data network identity and a group slice identifier. For example, the group identifier #1 corresponds to a group data network identity #1 and a group slice identifier #1.

S402: The NEF receives the first configuration request message, and sends a second configuration request message to a UDM. Correspondingly, the UDM receives the second configuration request message.

The second configuration request message is for sending a parameter carried in the first configuration request message, for example, the parameter carried in the first configuration request message in step S401. For example, the second configuration request message is an Nnef_ParameterProvision_Create/Update/Delete request.

S403: The UDM determines, based on the received second configuration request message, whether to update the group identifier (Group ID) and group subscription data, where the group subscription data includes the group network slice assistance information (group S-NSSAI) and the first indication information. The first indication information is the first indication information carried in the second configuration request message, that is, indicates that the terminal device group has the corresponding QoS parameter set. Optionally, the first indication information further includes the address information of the DN-AAA server.

In an implementation, the UDM compares the information carried in the received second configuration request message with locally stored information to determine whether the information stored in the UDM is updated. For example, the information carried in the second configuration request message includes at least one of the following data: the group identifier, the group slice identifier, and the first indication information.

When determining that the group identifier and the group subscription data are updated, the UDM sends a first notification message to an SMF, in other words, performs step S407.

S404: The UDM sends a second configuration response message in response to a second parameter configuration request message to the NEF, where the second configuration response message is for feeding back a parameter configuration result of the second parameter configuration request message to the NEF, that is, a parameter configuration success or failure. In this embodiment, the parameter configuration result is the success.

S405: The NEF sends a first configuration response message in response to the first parameter configuration request message to the AF, where the first configuration response message is for feeding back an execution result of the first configuration request message to the AF.

S406: The UE establishes a PDU session.

The UE may access a network and initiate a session request. The SMF may establish a corresponding data connection session, for example, the PDU session, for the UE, to ensure normal communication of user plane data.

To establish the PDU session, the UE generates a PDU session identifier, and the UE initiates, by sending a NAS message including a PDU session establishment request in an N1 SM container, a PDU session establishment procedure requested by the UE. The UE sends a PDU session identifier (PDU session ID), a PDU session DNN, PDU session slice S-NSSAI, and a PDU session request type corresponding to the PDU session establishment request. If the PDU session establishment request is a request for establishing a new PDU session, the PDU session request type indicates an "initial request". If an existing PDU session switched between 3GPP access and non-3GPP access, or a PDU session switched from an existing PDN connection in an EPC is requested, the PDU session request type indicates an "existing PDU session".

S407: The SMF receives the first notification message from the UDM.

The SMF receives the first notification message from the UDM, where the first notification message includes the first indication information, and the first indication information indicates to obtain, from the authentication server, the quality of service QoS parameter set applied to the terminal device group.

The first notification message further includes the group DNN and the group S-NSSAI.

In an implementation, the SMF obtains a terminal device identifier from an AMF, and sends the terminal device identifier to the UDM.

The UDM stores a subscription data packet of the terminal device and a group subscription data packet of the terminal device. The UDM determines, based on the terminal device identifier, the group identifier of the terminal device group to which the terminal device belongs, and then the UDM indexes, based on the group identifier, the group DNN and the group S-NSSAI that correspond to the group identifier.

When the UE is establishing the PDU session, the SMF sends an obtaining message to the UDM to obtain data information stored in the UDM. The UDM sends, to the SMF in response to the message, the indication information obtained in step S403. In this way, the SMF obtains the indication information, and the indication information indicates to obtain the QoS parameter set. Specifically, the UDM sends the first notification message to the SMF, where the first notification message carries the group identifier and the group subscription data. The group subscription data includes the group DNN, the group S-NSSAI, and the first indication information. For example, the first notification message is Nudm_SDM_get. It may be understood that when the UE establishes the PDU session, the SMF sends a subscription message to the UDM, and the subscription message is for subscribing to update information of the UDM.

When the UE has established the corresponding PDU session, in a process of establishing the corresponding PDU session for the UE, the SMF sends a subscription message to the UDM. After the data information stored in the UDM is updated, the UDM sends updated data information to the SMF in response to the subscription message. For example, the UDM sends the first notification message to the SMF, where the first notification message carries the first indication information, the group slice identifier, and the group data network identity, and the first indication information indicates to obtain the QoS parameter set. Optionally, the indication information includes an address of the DN-AAA server. Specifically, the UDM sends the first notification message to the SMF, where the first notification message carries the group DNN, the group S-NSSAI, and the first indication information.

S408: The SMF determines that a data connection session of the terminal device is for internal communication of the terminal device group to which the terminal device belongs.

The SMF determines, based on the received group DNN and group S-NSSAI, that a slice identifier corresponding to the data connection session of the terminal device is the same as the group S-NSSAI, and a data network identity of the data connection session of the terminal device is the same as the group DNN of the terminal device. If the slice identifier corresponding to the data connection session of the terminal device is the same as the group slice identifier, it is determined that the PDU session of the UE is for the internal communication of the terminal device group to which the terminal device belongs, and subsequent steps are triggered. If the slice identifier corresponding to the data connection session of the terminal device is different from the group slice identifier, it indicates that the PDU session of the terminal device is not for the internal communication of the terminal device group to which the terminal device belongs.

In an implementation, the SMF determines, based on the first notification message from the UDM, that the PDU session of the UE is for the internal communication of the terminal device group to which the UE belongs. The first notification message carries the group slice identifier and the group DNN. The SMF determines that a DNN and a slice identifier (S-NSSAI) that correspond to the PDU session of the terminal device are respectively the same as the group DNN and the group slice identifier, and triggers step S409.

The first notification message further includes the first indication information and the group identifier of the terminal device group, and the first indication information indicates to obtain the QoS parameter set. The first indication information further includes the address of the DN-AAA server. For example, the first notification message is SDM _Notification. The SMF sends a first request message to a DN-AAA server based on the first indication information.

The DNN and the slice identifier that correspond to the PDU session of the terminal device are obtained when the SMF establishes the PDU session for the UE. This is not limited herein in the present invention.

S409: The SMF sends the first request message to the authentication server. Correspondingly, the authentication server receives the first request message from the SMF. For example, the authentication server is the DN-AAA server.

The SMF sends the first request message to the DN-AAA server based on the indication information, where the first request message is for requesting to obtain the QoS parameter set.

The first request message includes at least one or a combination of the following group-granularity parameters: a group identifier, a group slice identifier, and a group DNN. The first request message further includes second indication information, and the second indication information indicates to obtain the QoS parameter set. The first request message is a first authentication request message.

S410: The DN-AAA server sends a first response message in response to the first request message to the SMF. Correspondingly, the SMF receives the first response message from the DN-AAA server.

A mapping relationship between one of the following group-granularity parameters and a QoS parameter set is preconfigured on the DN-AAA server, and the group-granularity parameter includes the group identifier, the group slice identifier, or the group DNN. The DN-AAA server indexes, based on the group-granularity parameter carried in the first request message, a QoS parameter set corresponding to the group-granularity parameter, to obtain the QoS parameter set corresponding to the terminal device group. The DN-AAA server sends the first response message to the SMF, where the first response message carries the QoS parameter set. Correspondingly, the SMF obtains the QoS parameter set corresponding to the terminal device group. In an implementation, a mapping relationship between a group DNN, a group slice identifier, and a QoS parameter set is preconfigured on the DN-AAA server. The DN-AAA server obtains the corresponding QoS parameter set based on the group slice identifier. For example, the group DNN and the group slice identifier are the group DNN #1 and the S-NSSAI #1, and the corresponding QoS parameter set is the QoS parameter #1. The first request message carries the group DNN, the group slice identifier, and the indication information. The DN-AAA server obtains, based on the group DNN and the group slice identifier, a QoS parameter set corresponding to the group DNN and the group slice identifier, and sends the first response message to the SMF in response to the first request message, where the first response message carries the QoS parameter set corresponding to the group DNN and the group slice identifier.

In another implementation, a mapping relationship between a group identifier and a QoS parameter set is preconfigured on the DN-AAA server. The DN-AAA server obtains the corresponding QoS parameter set based on the group identifier. For example, the group identifier is the group ID #1, and the corresponding QoS parameter set is the QoS parameter #1. The first request message carries the group identifier and the indication information. The DN-AAA server obtains, based on the group identifier, the QoS parameter set corresponding to the group identifier, and sends the first response message to the SMF in response to the first request message, where the first response message carries the QoS parameter set corresponding to the group identifier.

The QoS parameter set includes a QoS parameter applied to the terminal device group. Specifically, the QoS parameter set includes at least one of the following parameters: a priority of a session transmission packet, a packet size, a delay, a maximum rate, a guaranteed rate, a packet error rate, a periodicity, a clock domain, packet arrival time, time to live, or silent time.

The DN-AAA server configures corresponding QoS parameter sets for the terminal device group based on different service requirements. For example, in a factory workshop, the DN-AAA server configures a same bandwidth, a same packet loss rate, and a same packet transmission delay for all production devices in the workshop. In this scenario, all the production devices in the workshop may be considered as a terminal device group, and a corresponding QoS parameter set includes a bandwidth, a packet loss rate, and a packet transmission delay.

The DN-AAA server indexes, based on the group DNN and the group slice identifier, the QoS parameter set corresponding to the group DNN and the group slice identifier, and sends the first response message in response to the first request message to the SMF, where the first response message carries the QoS parameter set.

The first response message is a first authentication response message. For example, the first response message is a response message for secondary authentication.

When a 1^{st} terminal device in the terminal device group establishes a PDU session, the SMF performs steps S409 and S410 to obtain the group DNN, the group slice identifier, and the QoS parameter set. The SMF stores the group DNN, the group slice identifier, and the QoS parameter set. In this way, when another terminal device in the terminal device group establishes a PDU session, the another terminal device may locally obtain the QoS parameter set from the SMF, without requesting to obtain the QoS parameter set from the DN-AAA server, to further reduce signaling exchange.

S411: The SMF sends a second request message to a PCF, where the second request message includes the QoS parameter set.

Correspondingly, the PCF receives the second request message from the SMF. In this way, the PCF obtains the QoS parameter set.

In a possible implementation, the second request message is a message for invoking an SM policy association service.

S412: The PCF obtains a corresponding policy control rule set based on the QoS parameter set, where the policy control rule set includes at least one policy control rule.

The PCF stores a table of a mapping relationship between a QoS parameter set and a policy control rule set. The PCF queries the table of the mapping relationship by using the QoS parameter set to obtain a corresponding control policy rule that is also referred to as a PCC rule. Table 1 is the table of the mapping relationship between the QoS parameter set and the policy control rule set according to this embodiment of this application.

**Table 1: Table of a mapping relationship between a QoS parameter set and a policy control rule set**

| QoS parameter set | Policy control rule set |
|---|---|
| QoS parameter #1 | PCC #1 |
| QoS parameter #1 and QoS parameter #2 | PCC #2 |
| QoS parameter #1, QoS parameter #2, and QoS parameter #3 | PCC #3 and PCC #4 |

It may be understood that Table 1 merely provides an example of the table of the mapping relationship.

In an example, the PCC rule includes one or a combination of the following parameters: a 5G quality identity (5G quality identity, 5QI), an allocation and retention priority (assign and retain priorities, ARP), a guaranteed flow bit rate (guaranteed flow bit rate, GFBR), a maximum flow bit rate (maximum flow bit rate, MFBR), a maximum packet loss rate (maximum packet loss rate, MPLR), and a reflective QoS attribute (reflective QoS attribute, RQA).

S413: The PCF sends a second response message in response to the second request message to the SMF, where the second response message includes the policy control rule set.

Correspondingly, the SMF receives the second response message including the policy control rule set from the PCF, to obtain the policy control rule set.

S414: The SMF applies the policy control rule set to the data connection session of the terminal device.

In an implementation, the SMF binds the policy control rule set to at least one QoS flow in the data connection session. In other words, the PCC rule is associated with the QoS flow in the PDU session.

Specifically, the SMF binds the PCC rule to a QoS flow in the foregoing PDU session.

It may be understood that one PDU session corresponds to a plurality of QoS flows, and a plurality of PCC rules may be associated with one QoS flow.

When the PCF provides the PCC rule, the SMF determines whether a QoS parameter in the QoS flow is the same as a QoS parameter in the PCC rule. If such a QoS flow does not exist, the SMF determines a QoS parameter of a new QoS flow by using a parameter in the PCC rule, and establishes the new QoS flow based on the QoS parameter. In this case, the PCC rule is bound to the new QoS flow. If a QoS flow with the same QoS parameter exists, the SMF maps the PCC rule to the existing QoS flow based on the QoS parameter and a service requirement.

The SMF binds the PCC rule to the QoS flow in the data connection session based on the QoS and the service requirement. For each PCC rule bound to the QoS flow, if the PCC rule is used, the SMF generates a QoS rule based on the PCC rule, and provides the QoS rule together with an addition operation for the terminal device.

The QoS rule includes a QFI, a data packet filter set, and a priority that are associated with the QoS flow. The QoS rule also includes a QoS rule identifier, and the identifier is unique in the PDU session and is generated by the SMF.

It should be noted that "binding" is merely an example description, and may be replaced with any other possible description, for example, "mapping" or "corresponding". This is not specifically limited herein.

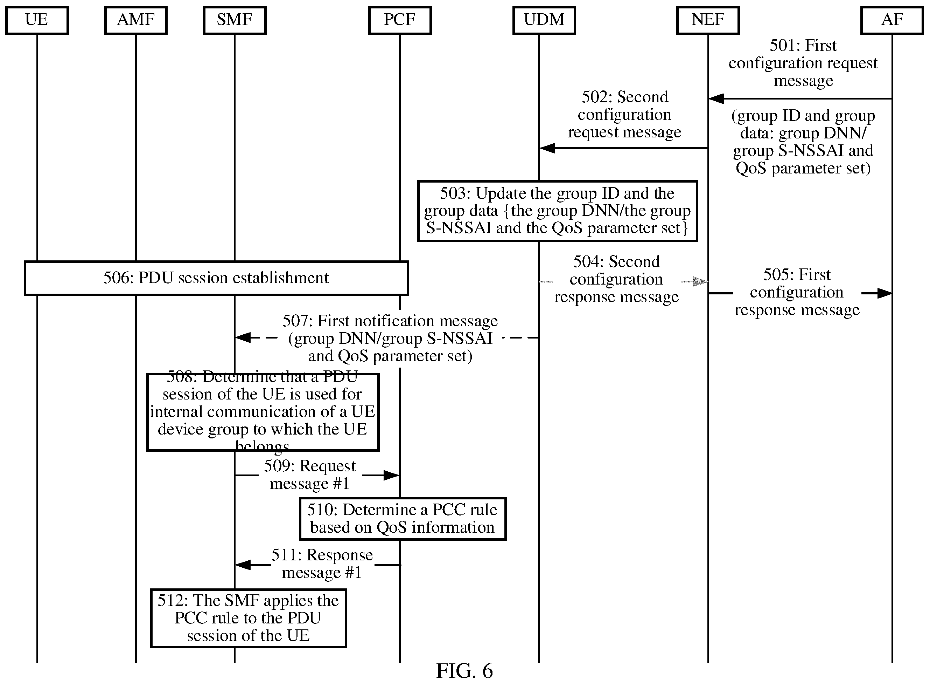

FIG. 6 is a schematic flowchart of another resource configuration management method according to an embodiment of this application. A difference from the resource configuration management method shown in FIG. 5A and FIG. 5B lies in that, in the method in this embodiment, a first configuration request message includes a QoS parameter set.

S501: An application function network element AF sends the first configuration request message to a network function exposure network element NEF. A difference from the embodiment shown in FIG. 4 lies in that the first configuration request message includes the following related parameters: a group identifier (Group ID), a group DNN, group network slice assistance information (Group S-NSSAI), and the QoS parameter set.

The QoS parameter set is a QoS parameter set corresponding to the group identifier or the group DNN and the group network slice assistance information. For a function of the first configuration request message, refer to the descriptions of step S401. Details are not described herein again.

S502: The NEF receives the first configuration request message, and sends a second configuration request message to a UDM. Correspondingly, the UDM receives the second configuration request message.

A difference between this step and S402 lies in that the second configuration request message includes a QoS parameter set.

S503: The UDM determines, based on the received second configuration request message, whether to update the group identifier, the group DNN, the group network slice assistance information, and the QoS parameter set.

For details of this step, refer to the descriptions of S403. To avoid repetition, details are not described herein again.

S504: The UDM sends a second configuration response message in response to a second parameter configuration request message to the NEF, where the second configuration response message is for feeding back a parameter configuration result of the second parameter configuration request message to the NEF.

S505: The NEF sends a first configuration response message in response to the first parameter configuration request message to the AF, where the first configuration response message is for feeding back an execution result of the first configuration request message to the AF.

S506: A UE establishes a PDU session.

For specific implementation of this step, refer to step S406. Details are not described herein again.

S507: An SMF receives the QoS parameter set from the UDM.

The SMF receives a first notification message from the UDM, where the first notification message includes the group DNN, the group S-NSSAI, and the QoS parameter set.

When the UE is establishing the PDU session, the SMF sends an obtaining message to the UDM to obtain data information stored in the UDM. The UDM sends, to the SMF in response to the message, the QoS parameter set obtained in step S503, so that the SMF obtains the QoS parameter set. Specifically, the UDM sends the first notification message to the SMF, where the first notification message carries the group DNN, the group S-NSSAI, and the QoS parameter set. For example, the first notification message is SMD_get.

The UE has established the corresponding PDU session. In a process of establishing a corresponding PDU session for the UE, the SMF sends a subscription message to the UDM. After determining that the UDM updates the group identifier and the QoS parameter set, the UDM sends an updated group identifier and an updated QoS parameter set to the SMF in response to the subscription message. Specifically, the UDM sends the first notification message to the SMF, where the first notification message carries the group DNN, the group S-NSSAI, and the QoS parameter set.

S508: The SMF determines that a data connection session of the terminal device is for internal communication of a terminal device group to which the terminal device belongs.

The SMF determines, based on the received group slice identifier, that a DNN and a slice identifier that correspond to the data connection session of the terminal device are the same as the group DNN and the group slice identifier. If the DNN and the slice identifier that correspond to the data connection session of the terminal device are the same as the group DNN and the group slice identifier, it is determined that the PDU session of the UE is for the internal communication of the terminal device group of the UE, and subsequent steps are triggered. If the DNN and the slice identifier that correspond to the data connection session of the terminal device are different from the DNN and the group slice identifier, it indicates that the PDU session of the UE is not for the internal communication of the terminal device group of the UE.

In an implementation, the SMF determines, based on the first notification message from the UDM, that the PDU session of the terminal device is for the internal communication of the terminal device group to which the terminal device belongs. The first notification message carries the group DNN. The SMF determines that the DNN and the slice identifier (S-NSSAI) that correspond to the PDU session of the terminal device are the same as the group DNN and the group S-NSSAI, and triggers step S509.

S509: The SMF sends a request message #1 to a PCF, where the request message #1 includes the QoS parameter set. Correspondingly, the PCF receives the request message #1 from the SMF.

For specific implementation of this step, refer to S411. Details are not described herein again.

S510: The PCF obtains a corresponding policy control rule set based on the QoS parameter set.

For specific implementation of this step, refer to S412. Details are not described herein again.

S511: The PCF sends a response message #1 in response to the request message #1 to the SMF, where the response message #1 includes the policy control rule set. Correspondingly, the SMF receives the response message #1 from the PCF.

For specific implementation of this step, refer to S413. Details are not described herein again.

S512: The SMF applies the policy control rule set to the data connection session.

For specific implementation of this step, refer to S414. Details are not described herein again.

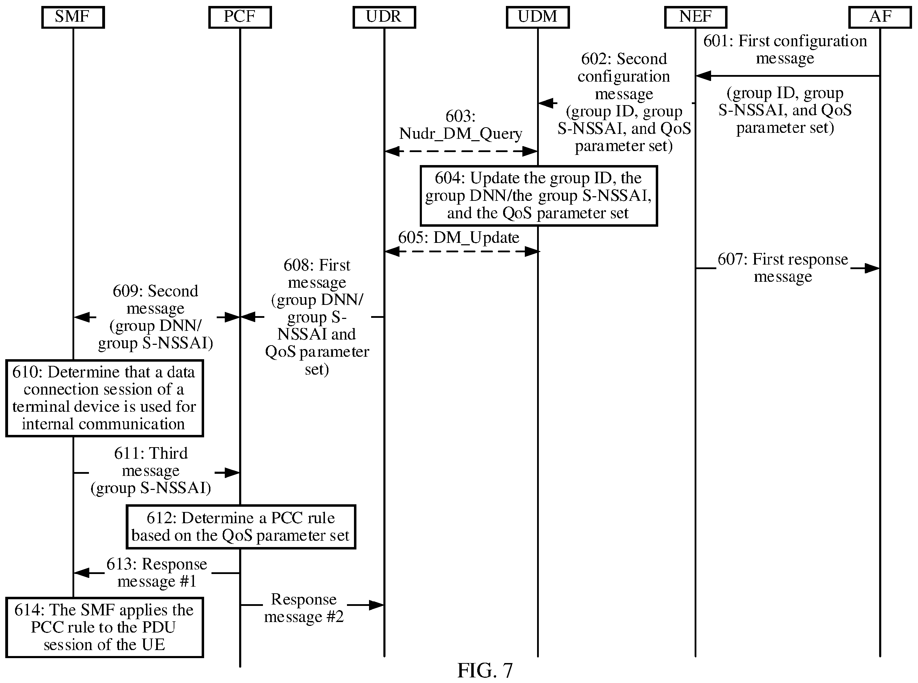

FIG. 7 is a schematic flowchart of another resource configuration management method according to an embodiment of this application.

Step S601: An application function network element AF sends a first configuration request message to a network function exposure network element NEF. The first configuration request message includes a group identifier (Group ID), a group DNN, a slice identifier (Group S-NSSAI), and a QoS policy parameter set.

For specific implementation of this step, refer to S501. Details are not described herein again.

Step S602: The NEF sends a second configuration request message to a UDM. Correspondingly, the UDM receives the second configuration request message. The second configuration request message includes an identifier (Group ID), the group DNN, the group slice identifier (Group S-NSSAI), and the QoS policy parameter set.

For specific implementation of this step, refer to S502. Details are not described herein again.

S603: The UDM sends a DM_Query message to a UDR. Correspondingly, the UDR returns the message to the UDM.

In a specific implementation, the UDM receives the second configuration request message, and sends the DM_Query message to the UDR. For example, the DM_Query message includes the group identifier and group subscription data, and the group subscription data includes the group identifier, the group slice identifier, and/or the group DNN. In an implementation, the UDR stores subscription data of each terminal device in a terminal device group and/or subscription data of the terminal device group. The UDR receives the DM_Query message, and returns the queried subscription data corresponding to each terminal device and/or the subscription data of the terminal device group to the UDM based on an identifier of the terminal device. Therefore, the UDM obtains the group subscription data corresponding to the terminal device group. Specifically, the UDR queries, based on the group identifier (Group ID), the group subscription data corresponding to the group identifier.

For example, if a new 5G VN group is created, the UDM needs to allocate a unique group ID to the 5G VN group, and include the newly allocated group ID in an Nudr_DM_creation request message (a first configuration request message). If a 5G VN group member list or 5G VN group data changes, the UDM updates the group subscription data based on the request of the AF/NEF. The group subscription data includes one or a combination of the following parameters: the group identifier, the group slice identifier, or the group DNN.

S604: The UDM updates the subscription data and the subscription data of the terminal device group.

S605: The UDM sends a DM_Update message to the UDR. Correspondingly, the UDR returns the message to the UDM.

In an implementation, the DM _Update message carries the group identifier, the group DNN, the group slice identifier, and a QoS parameter set.

A DM _Update service is invoked to update the group identifier, the group DNN/group S-NSSAI, and the QoS parameter set of the terminal device group in the UDR.

S606: The UDM sends a second configuration response message in response to a second parameter configuration request message to the NEF, where the second configuration response message is for feeding back a parameter configuration result of the second parameter configuration request message to the NEF.

S607: The NEF sends a first configuration response message in response to a first parameter configuration request message to the AF, where the first configuration response message is for feeding back an execution result of the first configuration request message to the AF.

S608: The UDR sends a first message to a PCF, where the first message includes the QoS parameter set and the group slice identifier.

In an implementation, in step 605, the UDR obtains an updated group slice identifier and QoS parameter set, and sends the group slice identifier and the QoS parameter set to the PCF by using the first message. Optionally, the PCF stores the received QoS parameter set. It may be understood that, in response to the first message, the PCF sends a response message #2 to the UDR, to notify the UDR of a request result.

S609: The PCF sends a second message to an SMF, where the second message includes the group slice identifier or the group DNN. Correspondingly, the SMF receives the second message, where the second message includes the group slice identifier or the group DNN.

For example, the second message is an SM policy association.

S610: The SMF determines that a data connection session of a terminal device is for internal communication of a terminal device group to which the terminal device belongs.

For a specific implementation in which the SMF determines that the data connection session of the terminal device is for the internal communication of the terminal device group to which the terminal device belongs, refer to step S408. Details are not described herein again.

S611: The SMF sends a third message to the PCF, where the third message includes the group slice identifier. Correspondingly, the PCF receives the third message, and obtains the group slice identifier.

Optionally, the third message further includes the QoS parameter set.

S612: The PCF obtains a corresponding policy control rule set based on the QoS parameter set.

For specific implementation of step S612, refer to step S412. Details are not described herein again.

S613: The PCF sends a response message #1 to the SMF, where the response message #1 includes the policy control rule set.

S614: The SMF applies the policy control rule set to the data connection session.

For implementation of S611 and S612, refer to steps 413 and 414. Details are not described herein again.

The foregoing describes in detail the communication resource management method in embodiments of this application with reference to FIG. 3 to FIG. 6. The following describes in detail a communication apparatus and a related device in embodiments of this application with reference to FIG. 7 to FIG. 10. It should be understood that the communication apparatuses and the related device shown in FIG. 7 to FIG. 10 can implement one or more steps in the method procedures shown in FIG. 3 to FIG. 6. To avoid repetition, details are not described herein again.

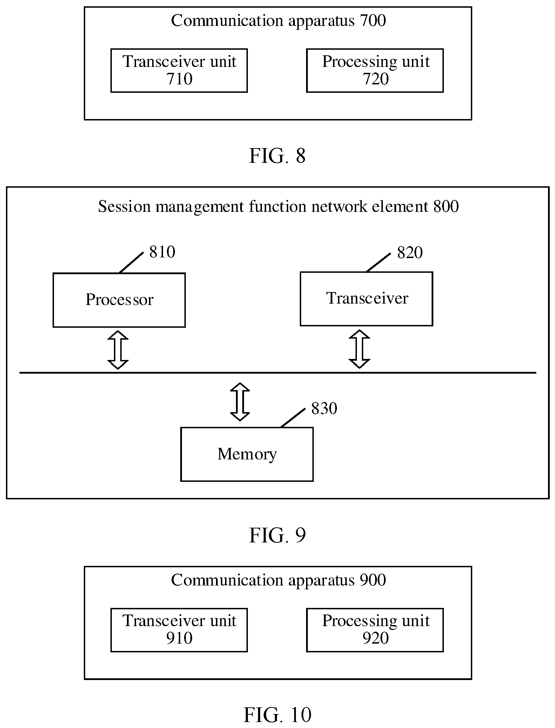

FIG. 8 shows a communication apparatus according to an embodiment, configured to implement the method performed by the SMF in embodiments shown in FIG. 3 to FIG. 7. The communication apparatus 700 includes a transceiver unit 710 and a processing unit 720. The transceiver unit 710 is configured to obtain a quality of service QoS parameter set from a first network element. The processing unit 720 is configured to determine that a data connection session of a terminal device is for internal communication of a terminal device group to which the terminal device belongs; obtain a corresponding policy control rule set based on the QoS parameter set, where the policy control rule set includes at least one policy control rule; and apply the policy control rule to the data connection session.

In an implementation, related functions implemented by the units in FIG. 8 may be implemented by using a transceiver, a processor, and a memory.

FIG. 9 is a diagram of a session management function network element according to an embodiment of this application. The session management function network element may be a device (for example, a chip) that can perform the communication resource management method provided in embodiments of this application. The session management function network element may include a transceiver 801, at least one processor 802, and a memory 803. The transceiver 801, the processor 802, and the memory 803 may be connected to each other through one or more communication buses, or may be connected to each other in another manner.

The transceiver 801 may be configured to send data or receive data. It may be understood that the transceiver 801 is a general term, and may include a receiver and a transmitter.

The processor 802 may be configured to process data of the session management function network element. The processor 802 may include one or more processors. For example, the processor 802 may be one or more central processing units (central processing units, CPUs), one or more network processors (network processors, NPs), one or more hardware chips, or any combination thereof. When the processor 802 is one CPU, the CPU may be a single-core CPU, or may be a multi-core CPU.

The memory 803 is configured to store program code and the like. The memory 803 may include a volatile memory (volatile memory), for example, a random access memory (random access memory, RAM). The memory 803 may further include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 803 may further include a combination of the foregoing types of memories.

The processor 802 and the memory 803 may be coupled through an interface, or may be integrated together. This is not limited in this embodiment.

The transceiver 801 and the processor 802 may be configured to perform the communication resource management method provided in embodiments of this application. Specific implementations are as follows:
The transceiver 801 is configured to obtain a quality of service QoS parameter set from a first network element, where the QoS parameter set includes at least one QoS parameter applied to a terminal device group.

The processor 802 is configured to determine that a data connection session of a terminal device is for internal communication of a terminal device group to which the terminal device belongs; obtain a corresponding policy control rule set based on the QoS parameter set, where the policy control rule set includes at least one policy control rule; and apply the policy control rule to the data connection session.

FIG. 10 is a diagram of another communication apparatus according to an embodiment of this application. The communication apparatus shown in FIG. 10 is configured to implement the method performed by the UDM in the foregoing embodiment. The communication apparatus 900 includes a transceiver unit 910 and a processing unit 920. The processing unit 920 obtains information related to a QoS parameter set by using the transceiver unit 910, where the QoS parameter set includes at least one QoS parameter shared by a group of terminal devices. The processing unit 920 sends the information related to the QoS parameter set to a session management network element by using the transceiver unit 910, where the information related to the QoS parameter set is the QoS parameter set or indication information that indicates the QoS parameter set.

In an implementation, related functions implemented by the units in FIG. 10 may be implemented by using a transceiver, a processor, and a memory.

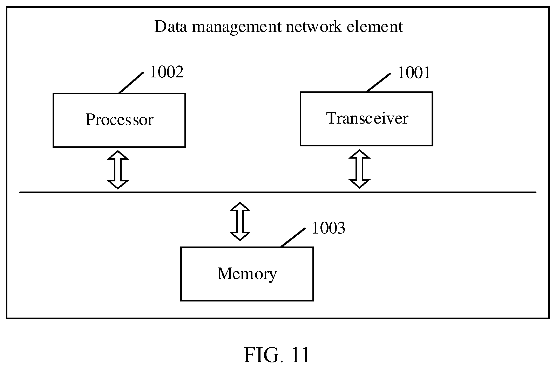

FIG. 11 is a diagram of a UDM network element according to an embodiment of this application. The session management function network element may be a device (for example, a chip) that can perform the communication resource management method provided in embodiments of this application. The session management function network element may include a transceiver 1001, at least one processor 1002, and a memory 1003. The transceiver 1001, the processor 1002, and the memory 1003 may be connected to each other through one or more communication buses, or may be connected to each other in another manner.

The transceiver 1001 may be configured to send data or receive data. It may be understood that the transceiver 1001 is a general term, and may include a receiver and a transmitter.

The processor 1002 may be configured to process data of the UDM network element. The processor 1002 may include one or more processors. For example, the processor 1002 may be one or more central processing units (central processing units, CPUs), one or more network processors (network processors, NPs), one or more hardware chips, or any combination thereof. When the processor 1002 is one CPU, the CPU may be a single-core CPU, or may be a multi-core CPU.

The memory 1003 is configured to store program code and the like. The memory 1003 may include a volatile memory (volatile memory), for example, a random access memory (random access memory, RAM). The memory 1003 may further include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 1003 may further include a combination of the foregoing types of memories.

The processor 1002 and the memory 1003 may be coupled through an interface, or may be integrated together. This is not limited in this embodiment.

The transceiver 1001 and the processor 1002 may be configured to perform the communication resource management method provided in embodiments of this application. Specific implementations are as follows:
The transceiver 1001 is configured to obtain information related to a QoS parameter set, where the QoS parameter set includes at least one QoS parameter shared by a group of terminal devices; and send the information related to the QoS parameter set to a session management network element, where the information related to the QoS parameter set is the QoS parameter set or indication information that indicates the QoS parameter set.

The processor 1002 may invoke the program code stored in the memory 1003 to perform the following operation: when the information related to the QoS parameter set is updated, the processor 1002 is configured to trigger sending of the information related to the QoS parameter set to the session management network element.

It needs to be noted that, a structure of the communication apparatus 900 shown in FIG. 10 does not constitute a limitation on the communication apparatus. An actual communication apparatus may include more or fewer components than those shown in the figure, combine some components, or have different component arrangement.

In addition, for technical effects of the communication apparatus 900, refer to the technical effects of the communication method in the foregoing method embodiments. Details are not described herein again.

An embodiment of this application provides a communication system. The communication system includes the access and mobility management network element, the radio access network device, and the session management network element in the foregoing embodiments.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is for implementing embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication resource management method, wherein the method comprises:
receiving a group identifier of a terminal device group to which a first terminal device belongs, and a data network identity and network slice assistance information of a data connection session of the first terminal device;
receiving, from a data management network element, a data network identity and network slice assistance information that correspond to the group identifier and first indication information, wherein the first indication information indicates to obtain, from an authentication server, a quality of service QoS parameter set applied to the terminal device group, and the QoS parameter set comprises at least one QoS parameter applied to the terminal device group;
determining that the data network identity and the network slice assistance information of the data connection session of the first terminal device are respectively the same as the data network identity and the network slice assistance information of the terminal device group, and sending a first authentication request message to the authentication server based on the first indication information, wherein the first authentication request message comprises the data network identity and the network slice assistance information of the terminal device group;
obtaining a first authentication response message from the authentication server, wherein the first authentication response message comprises the QoS parameter set of the terminal device group;
obtaining a policy control rule set based on the QoS parameter set, wherein the policy control rule set comprises at least one policy control rule; and
binding the policy control rule set to a QoS flow of the data connection session of the first terminal device.

2. The method according to claim 1, wherein the first indication information further comprises an address of the authentication server.

3. The method according to claim 1, wherein
the data network identity and the network slice assistance information of the data connection session of the first terminal device are received from the first terminal device; and
the group identifier of the terminal device group is received from the data management network element.

4. The method according to any one of claims 1 to 3, wherein
the obtaining a policy control rule set based on the QoS parameter set comprises:
sending a second request message to a policy control function entity, wherein the second request message comprises the QoS parameter set; and
receiving a second response message sent by the policy control function entity, wherein the second response message comprises the policy control rule set.

5. The method according to any one of claims 1 to 4, wherein
the QoS parameter is at least one of the following parameters: a priority of a session transmission packet, a packet size, a delay, a maximum rate, a guaranteed rate, a packet error rate, a periodicity, a clock domain, packet arrival time, time to live, or silent time.

6. A communication resource management method, wherein the method comprises:
receiving a configuration request message sent by an application function network element, wherein the configuration request message comprises a group identifier of a terminal device group to which a first terminal device belongs, a data network identity and network slice assistance information of the terminal device group, and first indication information, the first indication information indicates to obtain, from an authentication server, a quality of service QoS parameter set applied to the terminal device group, and the QoS parameter set comprises at least one QoS parameter applied to the terminal device group;
receiving the group identifier sent by a session management network element; and
indexing the data network identity and the network slice assistance information of the terminal device group based on the group identifier, and sending the data network identity and the network slice assistance information of the terminal device group and the first indication information to the session management network element.

7. The communication resource management method according to claim 6, wherein
the first indication information further comprises an address of the authentication server.

8. The method according to claim 6 or 7, wherein
the QoS parameter is at least one of the following parameters: a priority of a session transmission packet, a packet size, a delay, a maximum rate, a guaranteed rate, a packet error rate, a periodicity, a clock domain, packet arrival time, time to live, or silent time.

9. A communication resource management method, comprising:
receiving, by a data management function entity, a configuration request message sent by an application function network element, wherein the configuration request message comprises a group identifier of a terminal device group to which a first terminal device belongs, a data network identity and network slice assistance information of the terminal device group, and first indication information, the first indication information indicates to obtain, from an authentication server, a quality of service QoS parameter set applied to the terminal device group, and the QoS parameter set comprises at least one QoS parameter applied to the terminal device group;
receiving, by the data management function entity, the group identifier sent by a session management network element;
indexing, by the data management function entity, the data network identity and the network slice assistance information of the terminal device group based on the group identifier, and sending the data network identity and the network slice assistance information of the terminal device group and the first indication information to a session management function entity;
receiving, by the session management function entity, the data network identity and the network slice assistance information of the terminal device group and the first indication information from the data management function entity;
determining, by the session management function entity, that a data network identity and network slice assistance information of a data connection session of the first terminal device are respectively the same as the data network identity and the network slice assistance information of the terminal device group, and sending a first authentication request message to the authentication server based on the first indication information, wherein the first authentication request message comprises the data network identity and the network slice assistance information of the terminal device group;
obtaining, by the session management function entity, a first authentication response message from the authentication server, wherein the first authentication response message comprises the QoS parameter set of the terminal device group;
obtaining, by the session management function entity, a policy control rule set based on the QoS parameter set, wherein the policy control rule set comprises at least one policy control rule; and
binding, by the session management function entity, the policy control rule set to a QoS flow of the data connection session of the first terminal device.

10. The method according to claim 9, wherein the first indication information further comprises an address of the authentication server.

11. The method according to claim 9, wherein
the session management function entity receives the data network identity and the network slice assistance information of the data connection session of the first terminal device from the first terminal device.

12. The method according to claim 9, wherein
the obtaining, by the session management function entity, a policy control rule set based on the QoS parameter set comprises:
sending a second request message to a policy control function entity, wherein the second request message comprises the QoS parameter set; and
receiving a second response message sent by the policy control function entity, wherein the second response message comprises the policy control rule set.

13. The method according to claim 9, wherein
the QoS parameter is at least one of the following parameters: a priority of a session transmission packet, a packet size, a delay, a maximum rate, a guaranteed rate, a packet error rate, a periodicity, a clock domain, packet arrival time, time to live, or silent time.

14. A communication apparatus, wherein the apparatus comprises a module configured to perform the method according to any one of claims 1 to 5.

15. A communication apparatus, wherein the apparatus comprises a module configured to perform the method according to any one of claims 6 to 8.

16. A communication apparatus, wherein the communication apparatus comprises a processor, and the processor is configured to execute instructions stored in a memory, to enable the communication apparatus to perform the communication method according to any one of claims 1 to 5 or claims 6 to 8.

17. A communication system, wherein the system comprises the communication apparatus according to claim 14 or 15.

18. A computer-readable storage medium, wherein the computer-readable storage medium comprises a computer program or instructions; and when the computer program or the instructions are run on a computer, the computer is enabled to perform the communication method according to any one of claims 1 to 5 or claims 6 and 7.
